# EUROPÄISCHE PATENTSCHRIFT

(11) **EP 3 211 260 B1**
(45) Veröffentlichungstag und Bekanntmachung des Hinweises auf die Patenterteilung: **25.12.2019**
(21) Anmeldenummer: 17152665.0
(22) Anmeldetag: 23.01.2017
(51) Int. Cl.: F16D 23/06

(54) **SYNCHRONISIERVORRICHTUNG UND SYNCHRONISATIONSVERFAHREN**
SYNCHRONIZING DEVICE AND SYNCHRONIZATION METHOD
DISPOSITIF ET PROCÉDÉ DE SYNCHRONISATION

(30) Priorität: 16.02.2016 DE 102016102701
(43) Veröffentlichungstag der Anmeldung: 30.08.2017
(60) Teilanmeldung: 18162927.0
(73) Patentinhaber: HOERBIGER Antriebstechnik Holding GmbH, 86956 Schongau (DE)
(72) Erfinder: DAMM, Ansgar, 86981 Kinsau (DE); KOELZER, Michael, 87672 Rosshaupten (DE); DEMPFLE, Andreas, 87653 Eggenthal (DE); BACK, Ottmar, 82362 Weilheim (DE); BINDER, Jürgen, 86956 Schongau (DE)
(74) Vertreter: Prinz & Partner mbB

(56) Entgegenhaltungen:
- EP-A2- 2 123 928
- WO-A1-2004/005740
- DE-A1-102004 041 754
- DE-A1-102006 036 795
- DE-A1-102009 027 719
- DE-A1-102010 048 344
- DE-A1-102012 001 836
- DE-A1-102014 107 371
- US-A1- 2011 167 957

## Beschreibung

Die Erfindung betrifft eine Synchronisiervorrichtung und ein Synchronisationsverfahren für ein Schaltgetriebe.

Sperrsynchronisierungen für Schaltgetriebe verfügen normalerweise über eine Sperrgeometrie zum Sperren der Schiebemuffe, solange eine Differenzdrehzahl zwischen der Schiebemuffe und dem Kupplungskörper des zu schaltenden Gangrads besteht. Um das Einfädeln der Schiebemuffe in die Kupplungsverzahnung des Kupplungskörpers zu erleichtern, ist in der Regel eine Einspurgeometrie vorgesehen, die durch eine Anspitzung sowohl der Schiebemuffenzähne als auch der Kupplungskörperzähne realisiert ist.

Eine Schaltkupplung, bei der sowohl die Schaltzähne als auch die Kuppelzähne angespitzt sind, ist z. B. aus der DE 10 2010 048 344 A1 bekannt.

Ferner sind in diesem Zusammenhang aus der DE 10 2004 041 754 A1 Anschlagflächen für eine axiale Abstützung einer Schiebemuffe einer Schaltkupplung an einem Kupplungskörper bekannt geworden. Die Anschlagflächen verjüngen sich dabei in axialer Richtung zum Kupplungskörper hin, wodurch ein Einarbeiten von Kupplungskörperzähnen in die Anschlagflächen vermieden wird.

Bei modernen automatisierten Schaltgetrieben, insbesondere Doppelkupplungsgetrieben gibt es Bestrebungen, die axiale Baulänge zu reduzieren.

Aus diesem Grund wurde bereits in der WO 2015/180949 A1 vorgeschlagen, die Kupplungskörperzähne an ihrem axial an die Schiebemuffe angrenzenden Zahnende ohne Einspurschräge auszubilden. Zumindest an der Verzahnung des Kupplungskörpers wird somit auf die Anspitzung und die Einspurgeometrie vollständig verzichtet. Damit lässt sich die ansonsten für die Einspurgeometrie mit ihren Schrägflächen und angespitzten Zahnenden verwendete axiale Baulänge einsparen.

Um auch ohne die Einspurschrägen ein zuverlässiges Einfädeln der Schiebemuffenzähne zwischen die Kupplungskörperzähne zu erreichen, wird dabei nach einer erfolgten Drehzahlsynchronisierung vorzugsweise wieder eine Drehzahldifferenz zwischen der Schiebemuffe und dem Kupplungskörper hergestellt. Dadurch gleiten die Stirnflächen der Schiebemuffenzähne an den Stirnflächen der Kupplungskörperzähne entlang und spuren aufgrund der axialen Schaltkraft bei Erreichen einer Zahnlücke zwischen die Kupplungskörperzähne ein.

Aufgabe der Erfindung ist es, eine Synchronisiervorrichtung für ein Schaltgetriebe weiter zu verbessern, welche bei geringer axialer Baulänge sowie besonders geringem Verdrehflankenspiel zwischen der Schiebemuffe und dem Kupplungskörper ein zuverlässiges Einspuren der Schiebemuffenverzahnung in die Kupplungskörperverzahnung sicherstellt.

Erfindungsgemäß wird diese Aufgabe gelöst durch eine Synchronisiervorrichtung für ein Schaltgetriebe, mit einer Schiebemuffe, die eine Innenverzahnung mit einer Vielzahl von Schiebemuffenzähnen aufweist und um eine Getriebeachse drehbar ist, einem Kupplungskörper eines Gangrads, der eine Außenverzahnung mit einer Vielzahl von Kupplungskörperzähnen hat, in die die Innenverzahnung der Schiebemuffe eingreifen kann, sowie einer Synchronisiereinheit, die eine axiale Bewegung der Schiebemuffe blockieren kann,
wobei die Kupplungskörperzähne an ihrem an die Schiebemuffe angrenzenden axialen Zahnende und/oder zumindest einige der Schiebemuffenzähne an ihrem an den Kupplungskörper angrenzenden axialen Zahnende jeweils eine einzige oder jeweils mehrere konvexe Stirnflächen aufweisen,
wobei sich die eine einzige konvexe Stirnfläche oder eine der mehreren konvexen Stirnflächen in Umfangsrichtung jeweils von einem ersten Fußpunkt angrenzend an eine Zahnflanke des jeweiligen Zahns über einen axial vorstehenden Scheitelabschnitt bis zu einem zweiten Fußpunkt erstreckt, wobei der zweite Fußpunkt bei einer einzigen konvexen Stirnfläche an eine entgegengesetzte Zahnflanke des Zahns angrenzt und bei mehreren konvexen Stirnflächen ein Talpunkt einer Einbuchtung zwischen benachbarten konvexen Stirnflächen ist, und wobei ein axialer Abstand zwischen dem Scheitelabschnitt und jedem der Fußpunkte höchstens 18 %, insbesondere höchstens 10 % einer Zahnbreite des Zahns beträgt.

Insbesondere sind bei mehreren konvexen Stirnflächen exakt zwei Stirnflächen vorgesehen, die symmetrisch zueinander liegen, bezogen auf einen Radialschnitt.

Unter konvexer Stirnfläche ist in diesem Zusammenhang eine von den Fußpunkten ausgehende, nach außen gewölbte sowie durch den Scheitelabschnitt, insbesondere Scheitelpunkt verlaufende Fläche zu verstehen, wobei die Wölbung in Radialrichtung gesehen durch eine stetige Krümmung, einen Polygonzug oder Mischformen hiervon gebildet wird.

Bei einem Kupplungskörperzahn mit konvex ausgebildetem axialen Zahnende grenzt zumindest der erste Fußpunkt der konvexen Stirnfläche unmittelbar an eine Zahnflanke des Kupplungskörperzahns an. Bei einem im axialen Zahnendbereich üblicherweise hinterlegten Schiebemuffenzahn mit konvex ausgebildetem Zahnende grenzt jeder Fußpunkt der konvexen Stirnfläche ebenfalls an eine Zahnflanke, insbesondere an einen Hinterlegungsabschnitt der Zahnflanke des Schiebemuffenzahns an. Bei mehreren konvexen Stirnflächen (insbesondere bei exakt zwei konvexen Stirnflächen) geht die erste Stirnfläche vom ersten Fußpunkt aus, um dann an einem Talpunkt zwischen benachbarten konvexen Stirnflächen zu enden. Der Talpunkt liegt bei zwei konvexen Stirnflächen exakt zwischen den beiden entgegengesetzten Zahnflanken.

Verglichen mit ebenen und senkrecht zur Axialrichtung verlaufenden Stirnflächen erleichtern die leicht konvexen Stirnflächen das Einspuren der Verzahnungen. Ferner sind auch die Materialbeanspruchungen sowie Verschleißerscheinungen im Übergangsbereich zwischen Stirnfläche und Zahnflanke deutlich reduziert. Insbesondere hat sich herausgestellt, dass bei einem Verdrehflankenspiel in der Größenordnung herkömmlicher Synchronisiervorrichtungen mit angespitzten Schiebemuffenzähnen und Kupplungskörperzähnen bereits durch geringe Wölbungen der konvexen Stirnfläche, also einem axialen Abstand zwischen Scheitelabschnitt und Fußpunkt von etwa 10 % der Zahnbreite, ein zuverlässiges Einspuren der Verzahnungen sichergestellt werden kann.

Gemäß einer Ausführungsform der Synchronisiervorrichtung ist die einzige konvexe Stirnfläche in Radialrichtung gesehen spiegelsymmetrisch zur axialen Zahnmittelachse ausgebildet. Auf diese Weise ist unabhängig von der Richtung der Relativdrehung zwischen Kupplungskörper und Schiebemuffe ein zuverlässiges und sicheres Einspuren gewährleistet. Die mehreren axialen Stirnflächen liegen in Radialrichtung gesehen zueinander spiegelsymmetrisch zur axialen Zahnmittelachse (X).

Die zumindest eine konvexe Stirnfläche des Schiebemuffenzahns ist bevorzugt zylindrisch ausgeführt.

Insbesondere kann die zumindest eine konvexe Stirnfläche in Radialrichtung gesehen von Fußpunkt zu Fußpunkt durch einen Mantelabschnitt eines Kreiszylinders gebildet werden, wobei der Radius des Kreiszylinders vorzugsweise wenigstens 2 mm beträgt. Um einem übermäßigen Verschleiß im Übergangsbereich zwischen Stirnfläche und Zahnflanke entgegenzuwirken, können im Bereich des Fußpunktes vorhandene Ecken oder Kanten zusätzlich abgerundet oder gefast sein.

Ferner kann die einzige oder die mehreren konvexen Stirnflächen jeweils einen Stirnflächenabschnitt aufweisen, der sich senkrecht zur Getriebeachse erstreckt oder dessen Tangente sich senkrecht zur Getriebeachse erstreckt.

Gemäß einer weiteren Ausführungsform der Synchronisiervorrichtung beträgt eine axiale Abmessung der Kupplungskörperzähne maximal 3 mm. Insbesondere kann der Kupplungskörper dabei als Kupplungsscheibe mit einer Blechdicke von maximal 3 mm ausgebildet sein. Bei entfallender Anspitzung der Kupplungskörperzähne lässt sich die axiale Abmessung der Kupplungskörperzähne oder der gesamten Kupplungsscheibe verringern, ohne dass sich die DrehmomentÜbertragungskapazität zwischen der Schiebemuffe und dem Kupplungskörper im geschalteten Zustand der Synchronisiervorrichtung reduziert. Speziell bei der Ausführung des Kupplungskörpers als Kupplungsscheibe lässt sich aufgrund der geringeren Blechdicke nicht nur die axiale Baulänge der Synchronisiervorrichtung reduzieren, sondern auch Material einsparen, was sich vorteilhaft auf das Gewicht und die Kosten der Synchronisiervorrichtung auswirkt.

Vorzugsweise beträgt ein Verdrehflankenspiel zwischen der Schiebemuffe und dem Kupplungskörper maximal 1°, insbesondere maximal 0,25°. Gegenüber herkömmlichen Klauenverzahnungen mit ebenen, senkrecht zur Getriebeachse verlaufenden Stirnflächen der Schiebemuffenzähne und Kupplungskörperzähne ist das Verdrehflankenspiel damit deutlich reduziert. Konkret liegt das Verdrehflankenspiel nunmehr in der Größenordnung des Verdrehflankenspiels von Synchronisiervorrichtungen, bei denen sowohl die Schiebemuffenzähne als auch die Kupplungskörperzähne eine Anspitzung aufweisen, wobei sich demgegenüber wiederum deutliche axiale Bauraumvorteile ergeben.

Gemäß einer weiteren Ausführungsform der Synchronisiervorrichtung weisen zumindest einige der Schiebemuffenzähne an ihrem an den Kupplungskörper angrenzenden Zahnende eine Stirnfläche auf, die eben ist und senkrecht zur Getriebeachse verläuft. Dadurch lässt sich der Fertigungsaufwand für die Schiebemuffe deutlich reduzieren, wobei in diesem Fall dann bevorzugt alle Kupplungskörperzähne an ihrem an die Schiebemuffe angrenzenden Zahnende jeweils eine oben beschriebene, konvexe Stirnfläche aufweisen.

Ferner ist es möglich, dass die Synchronisiervorrichtung kraftgesteuert ist, wobei die Synchronisiereinheit so ausgebildet ist, dass die Blockierung der Axialbewegung der Schiebemuffe bei Überschreiten einer vorbestimmten Maximalkraft aufgehoben wird. Bei einer derartigen Konstruktion wird im Gegensatz zu herkömmlichen Synchronisiereinheiten ein kraftgesteuertes Einkuppeln der Schiebemuffe in den Kupplungskörper ermöglicht, auch wenn der Drehzahlangleich durch die Synchronisiereinheit noch nicht abgeschlossen ist. Der Synchronring ist in diesem Fall ohne Außenverzahnung ausgeführt, um ein Weiterbewegen der Schiebemuffe in Axialrichtung zu erlauben.

Die Synchronisiereinheit kann einen Synchronring umfassen, welcher eine Außenverzahnung mit einer Vielzahl von Synchronringzähnen hat und eine axiale Bewegung der Schiebemuffe blockieren kann, wobei die Innenverzahnung der Schiebemuffe Sperrzähne mit einem in Umfangsrichtung beidseitig angespitzten axialen Zahnende sowie Einspurzähne mit einem stumpfen axialen Zahnende aufweist, und wobei sich Sperrzahngruppen von mehreren in Umfangsrichtung unmittelbar nebeneinanderliegenden Sperrzähnen sowie Einspurzahngruppen von mehreren in Umfangsrichtung unmittelbar nebeneinanderliegenden Einspurzähnen in Umfangsrichtung abwechseln.

Die Einspurzähne mit stumpfen axialen Zahnenden ermöglichen dabei eine axial äußerst kompakte Bauweise der Synchronisiereinheit sowie einen besonders kurzen axialen Schaltweg der Schiebemuffe zwischen ihrer Neutralstellung und ihrer geschalteten Stellung. Ferner ermöglicht die in Umfangsrichtung abwechselnde Anordnung von Sperrzahngruppen und Einspurzahngruppen eine besonders hohe Beanspruchbarkeit der Synchronisiervorrichtung. Während der Drehzahlsynchronisierung lassen sich durch die Gruppierung insbesondere die an den Synchronringzähnen und den Sperrzähnen auftretenden Flächenpressungen und Zahnfußbeanspruchungen verringern.

Gemäß einer Ausführungsform der Synchronisiervorrichtung weist der Synchronring in Umfangsrichtung gezahnte Ringsegmente mit Synchronringzähnen sowie zahnlose Ringsegmente ohne Synchronringzähne auf, wobei jede Sperrzahngruppe der Schiebemuffe axial angrenzend an ein gezahntes Ringsegment und jede Einspurzahngruppe der Schiebemuffe axial angrenzend an ein zahnloses Ringsegment angeordnet ist. Um Spannungsspitzen bei der Drehzahlsynchronisierung zu vermeiden, umfasst der Synchronring möglichst viele Synchronringzähne, wobei üblicherweise jedoch auch zahnlose Ringsegmente ohne Synchronringzähne vorgesehen sind, um beispielsweise Indexlappen oder Anschlagstücke am Synchronring anzuformen. Diese zahnlosen Ringsegmente werden nun in vorteilhafter Weise genutzt, um in diesem Bereich Einspurzahngruppen der Schiebemuffe anzuordnen. Gleichzeitig sind im Bereich der gezahnten Ringsegmente des Synchronrings Sperrzahngruppen der Schiebemuffe angeordnet, sodass bei identischer Zahnteilung von Synchronring und Schiebemuffe weiterhin jeder Synchronringzahn während der Drehzahlsynchronisierung an einem Sperrzahn der Schiebemuffe anliegt. Aufgrund der Einspurzähne mit stumpfen axialen Zahnenden weist die Synchronisiervorrichtung folglich eine äußerst geringe axiale Baulänge sowie einen extrem kurzen axialen Schaltweg auf. Gleichzeitig werden durch die geschickte Gruppierung der Sperrzähne und Einspurzähne unerwünschte Spannungsspitzen während der Drehzahlsynchronisierung vermieden.

Vorzugsweise liegen die Zahnenden der Sperrzähne und die Zahnenden der Einspurzähne im Wesentlichen in einer gemeinsamen Ebene, die sich senkrecht zur Getriebeachse erstreckt. Axial vorstehende Fangzähne sind folglich nicht vorgesehen und werden aufgrund der Drehzahlsynchronisierung mittels des Synchronrings zum Einspuren der Schiebemuffenzähne zwischen die Kupplungskörperzähne auch nicht benötigt.

Gemäß einer weiteren Ausführungsform der Synchronisiervorrichtung weisen die stumpfen Zahnenden der Einspurzähne entweder eine Stirnfläche auf, die eben ist und senkrecht zur Getriebeachse verläuft, oder eine einzige oder mehrere konvexe Stirnflächen, wobei sich die einzige konvexe Stirnfläche oder eine der mehreren konvexen Stirnflächen jeweils in Umfangsrichtung von einem ersten Fußpunkt (28) angrenzend an eine Zahnflanke (30) des Schiebemuffenzahns (18) über einen axial vorstehenden Scheitelabschnitt (32) bis zu einem zweiten Fußpunkt (34) erstreckt, wobei der zweite Fußpunkt bei einer einzigen konvexen Stirnfläche an eine entgegengesetzte Zahnflanke (36) des Zahns (18, 20) angrenzt und bei mehreren konvexen Stirnflächen ein Talpunkt einer Einbuchtung zwischen benachbarten konvexen Stirnflächen ist, und wobei ein axialer Abstand zwischen dem Scheitelabschnitt und jedem der Fußpunkte maximal 18%, insbesondere maximal 10 % einer Zahnbreite des Schiebemuffenzahns beträgt. Die Zahnbreite entspricht dabei einer in Umfangsrichtung gemessenen, das heißt tangentialen Abmessung des Schiebemuffenzahns.

Ferner können die in Umfangsrichtung beidseitig angespitzten axialen Zahnenden der Sperrzähne Sperrschrägen aufweisen, die mit der Getriebeachse einen Winkel einschließen, der maximal 70° beträgt.

Gemäß einer weiteren Ausführungsform der Synchronisiervorrichtung weist die Innenverzahnung der Schiebemuffe in Umfangsrichtung zwischen den Sperrzahngruppen und den Einspurzahngruppen jeweils einen Übergangszahn auf, wobei ein axiales Zahnende jedes Übergangszahns in Umfangsrichtung etwa mittig geteilt ist und geometrisch auf der an die Sperrzahngruppe angrenzenden Seite dem Zahnende eines Sperrzahns sowie auf der an die Einspurzahngruppe angrenzenden Seite dem Zahnende eines Einspurzahns entspricht. Auf diese Weise lässt sich die Innenverzahnung der Schiebemuffe besonders effizient zum Sperren gegen die Außenverzahnung des Synchronrings sowie zum Einspuren in die Außenverzahnung des Kupplungskörpers nutzen, da jeder Zwischenraum der Schiebemuffenzähne eindeutig einem Synchronringzahn oder einem Kupplungskörperzahn zugeordnet ist.

Vorzugsweise ist die Schiebemuffe ein Sinterbauteil. Die in Umfangsrichtung abwechselnde, gruppenweise Anordnung von Sperrzähnen und Einspurzähnen mit geometrisch unterschiedlich ausgeführten Zahnenden lässt sich durch Umformverfahren oder spanende Bearbeitungsverfahren nur sehr aufwendig realisieren. Daher empfiehlt sich die Herstellung der Schiebemuffe als Sinterbauteil.

Desweiteren umfasst die Erfindung auch Schaltgetriebe für ein Kraftfahrzeug, mit einer oben beschriebenen Synchronisiervorrichtung und einer Getriebesteuerung, die einen ersten Aktuator zum axialen Verschieben der Schiebemuffe und einen zweiten Aktuator zum Herstellen einer Drehzahldifferenz zwischen der Schiebemuffe und dem Kupplungskörper aufweist.

Nach einer Drehzahlsynchronisierung lässt sich durch den zweiten Aktuator bei diesem Schaltgetriebe in vorteilhafter Weise aktiv wieder eine gewisse Differenzdrehzahl aufbauen, damit die Schiebemuffenzähne zuverlässig zwischen die Kupplungskörperzähne einspuren können, um den gewünschten Gang einzulegen. Zum aktiven Herstellen der Drehzahldifferenz kann der zweite Aktuator beispielsweise eine Wellenbremse des Getriebes ansteuern, einen Kühlölstrom im Getriebe erhöhen, ein weiteres Gangrad des Getriebes ansynchronisieren, das nicht mit dem Kupplungskörper drehfest verbunden ist, und/oder einen Elektromotor ansteuern.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 einen Längsschnitt durch eine herkömmliche Synchronisiervorrichtung eines Schaltgetriebes;
- Figur 2 eine perspektivische Explosionsansicht einer herkömmlichen Synchronisiervorrichtung eines Schaltgetriebes;
- Figur 3 einen weiteren Längsschnitt durch eine herkömmliche Synchronisiervorrichtung eines Schaltgetriebes;
- Figur 4 eine perspektivische Explosionsansicht einer erfindungsgemäßen Synchronisiervorrichtung eines Schaltgetriebes;
- Figur 5 einen Kupplungskörper der Synchronisiervorrichtung gemäß Figur 4;
- Figur 6 einen Detailausschnitt des Kupplungskörpers gemäß Figur 5;
- Figur 7a Ausführungsvarianten eines Kupplungskörperzahns in Radialrichtung gesehen;
- Figur 7b eine weitere Ausführungsvariante eines Kupplungskörperzahns in Radialrichtung gesehen,
- Figur 8 eine Schiebemuffe der Synchronisiervorrichtung gemäß Figur 4;
- Figur 9 einen Detailausschnitt der Schiebemuffe gemäß Figur 8;
- Figur 10 axiale Endbereiche eines Sperrzahns sowie eines Einspurzahns der Schiebemuffe gemäß den Figuren 8 und 9 in Radialrichtung gesehen;
- Figur 11 alternative Ausführungsvarianten für den axialen Endbereich eines Einspurzahns der Schiebemuffe gemäß den Figuren 8 und 9 in Radialrichtung gesehen;
- Figur 12 einen Abwicklungsausschnitt der Schiebemuffe und des Kupplungskörpers der erfindungsgemäßen Synchronisiervorrichtung zur Veranschaulichung des Verdrehflankenspiels;
- Figur 13 einen Synchronring der Synchronisiervorrichtung gemäß Figur 4; und
- Figuren 14 bis 17 schematische Darstellungen eines Schaltablaufs bei einer erfindungsgemäßen Synchronisiervorrichtung.

In der folgenden Beschreibung tragen Bauteile, die einander funktional weitgehend entsprechen identische Bezugszeichen, wobei die Bezugszeichen von aus dem Stand der Technik bekannten Bauteilen zusätzlich mit einem Apostroph versehen sind.

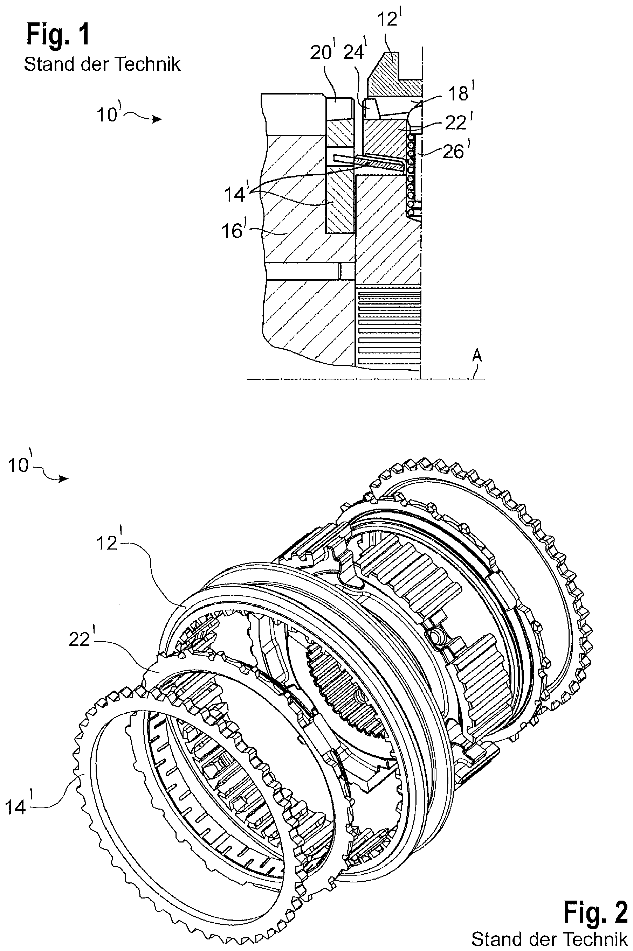

Die Figuren 1 bis 3 zeigen eine bekannte Synchronisiervorrichtung 10' eines Schaltgetriebes, mit einer längs einer Getriebeachse A bewegbaren Schiebemuffe 12', die drehfest mit einer nicht näher dargestellten Welle rotiert. Ferner umfasst die Synchronisiervorrichtung 10' einen als Kupplungsscheibe ausgebildeten Kupplungskörper 14', der fest mit einem Gangrad 16' des Schaltgetriebes verbunden ist. Das Gangrad 16' sitzt als Losrad drehbar auf der Welle und kann mit dieser über die Schiebemuffe 12' drehfest verbunden werden.

Die Schiebemuffe 12' weist eine Innenverzahnung mit Schiebemuffenzähnen 18' auf, während der Kupplungskörper 14' eine Außenverzahnung mit Kupplungskörperzähnen 20' besitzt.

Zur Durchführung einer Drehzahlsynchronisierung und eines daran anschließenden Einspurvorgangs, bei dem die Schiebemuffenzähne 18' in die Zwischenräume der Kupplungskörperzähne 20' eingespurt werden, ist eine Synchronisiereinheit vorgesehen, die in bekannter Weise einen Synchronring 22' umfasst, der eine Außenverzahnung mit einer Vielzahl von Synchronringzähnen 24' aufweist. Eine in Radialrichtung federbeaufschlagte Kugel ist Teil eines Druckstücks 26', welches als Vorsynchroneinheit dient.

Eine derartige Synchronisiervorrichtung 10' nach dem Borg-Warner-Prinzip ist allgemein bekannt. Zu Beginn der Axialbewegung der Schiebemuffe 12' übt die Vorsynchroneinheit eine Axialkraft auf den Synchronring 22' aus, wobei der Synchronring 22' in Kontakt mit einer Reibfläche des in Figur 1 zweiteilig ausgeführten Kupplungskörpers 14' kommt und so bei einem Drehzahlunterschied in Umfangsrichtung verstellt wird. Dadurch werden die Synchronringzähne 24' und die Schiebemuffenzähne 18' relativ zueinander so positioniert, dass sie eine axiale Bewegung der Schiebemuffe 12' bis zu einer Drehzahlangleichung sperren. Während der Drehzahlsynchronisierung blockieren die Synchronringzähne 24' die Schiebemuffe 12', sodass ein Einspuren der Schiebemuffenzähne 18' zwischen die Kupplungskörperzähne 20' verhindert wird. Erst nach einer Drehzahlsynchronisierung kann der Synchronring 22' in Umfangsrichtung zurückgestellt werden und ermöglicht das Einspuren der Schiebemuffenzähne 18' zwischen die Kupplungskörperzähne 20'.

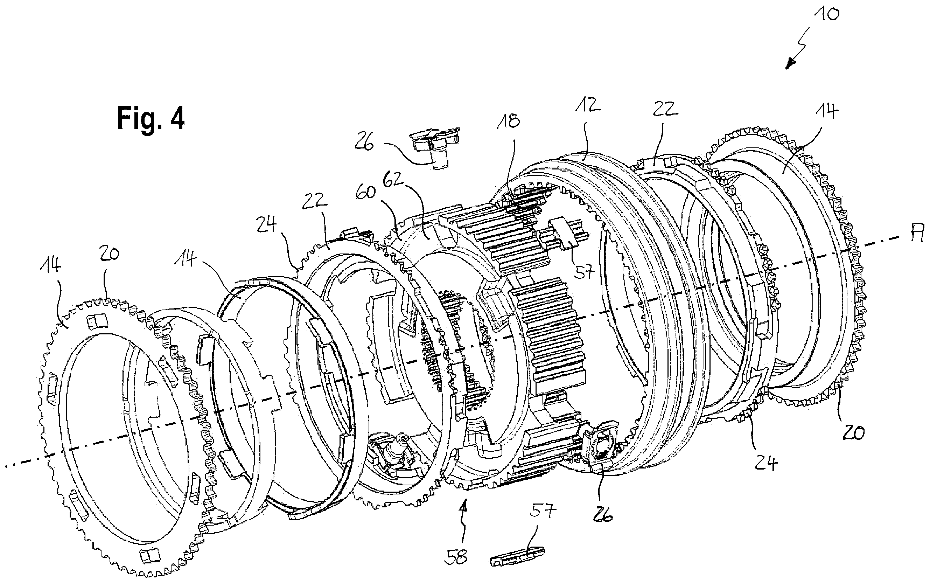

Die Figur 4 zeigt eine erfindungsgemäße Synchronisiervorrichtung 10 für ein Schaltgetriebe eines Kraftfahrzeugs, mit einer Schiebemuffe 12, die eine Innenverzahnung mit einer Vielzahl von Schiebemuffenzähnen 18 aufweist und um eine Getriebeachse A drehbar ist, sowie einem als Kupplungsscheibe ausgebildeten Kupplungskörper 14 eines Gangrads, der eine Außenverzahnung mit einer Vielzahl von Kupplungskörperzähnen 20 hat, in die die Innenverzahnung der Schiebemuffe 12 eingreifen kann. Die Synchronisiervorrichtung 10 umfasst ferner eine Synchronisiereinheit mit einem Synchronring 22, der eine Außenverzahnung mit einer Vielzahl von Synchronringzähnen 24 hat und eine axiale Bewegung der Schiebemuffe 12 blockieren kann.

Der generelle Aufbau und das Funktionsprinzip nach Borg-Warner sind bereits allgemein aus dem Stand der Technik bekannt. Ferner wird diesbezüglich auf die obige Beschreibung zu den Figuren 1 bis 3 verwiesen und im Folgenden hauptsächlich auf vorteilhafte Unterschiede eingegangen.

Um eine besonders geringe axiale Baulänge der Synchronisiervorrichtung 10 mit einem kurzen axialen Schaltweg sowie gleichzeitig ein besonders geringes Verdrehflankenspiel zwischen der Schiebemuffe 12 und dem Kupplungskörper 14 realisieren zu können, weisen die Kupplungskörperzähne 20 an ihrem an die Schiebemuffe 12 angrenzenden axialen Zahnende und/oder zumindest einige der Schiebemuffenzähne 18 an ihrem an den Kupplungskörper 14 angrenzenden axialen Zahnende jeweils eine konvexe Stirnfläche auf, auf deren Form weiter unten noch genauer eingegangen wird.

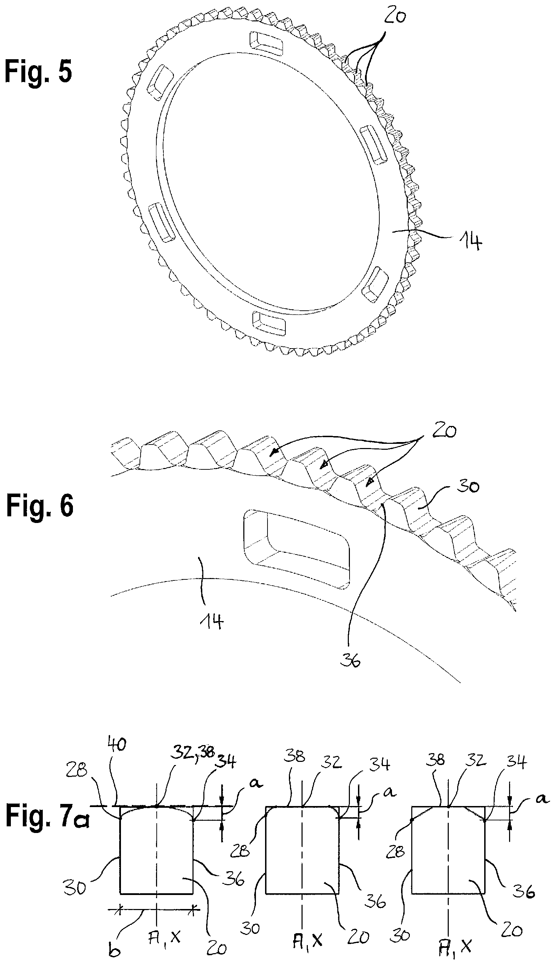

Die Figur 5 zeigt eine perspektivische Detailansicht des Kupplungskörpers 14 der Synchronisiervorrichtung 10 gemäß Figur 4. Bereits in dieser Darstellung wird deutlich, dass die Kupplungskörperzähne 20 an ihren axialen Zahnenden keine herkömmliche, angespitzte Einspurgeometrie aufweisen.

Eine axiale Abmessung der Kupplungskörperzähne 20 kann aufgrund der entfallenden Anspitzung reduziert werden und beträgt typischerweise maximal 3 mm. Die erforderliche axiale Abmessung hängt selbstverständlich von dem durch die Kupplungskörperzähne 20 zu übertragenden Drehmoment ab, wobei eine axiale Zahnlänge von 3 mm für übliche Fahrzeugschaltgetriebe eine ausreichende Drehmomentübertragungskapazität bereitstellt.

Im vorliegenden Ausführungsbeispiel ist der Kupplungskörper 14 konkret als Kupplungsscheibe ausgeführt. Infolge der axial geringeren Abmessung der Kupplungskörperzähne 20 lässt sich demzufolge natürlich auch die gesamte axiale Abmessung der Kupplungsscheibe auf eine Blechdicke von maximal 3 mm reduzieren. Somit lässt sich nicht nur die axiale Baulänge, sondern auch der Materialbedarf und das Gewicht der Synchronisiervorrichtung 10 in vorteilhafter Weise reduzieren.

Die Figur 6 zeigt einen Ausschnitt des Kupplungskörpers 14 gemäß Figur 5 im Bereich der Kupplungskörperzähne 20. Anhand dieser Darstellung lässt sich erkennen, dass im vorliegenden Ausführungsbeispiel jeder Kupplungskörperzahn 20 an seinem an die Schiebemuffe 12 angrenzenden axialen Zahnende eine konvexe Stirnfläche aufweist.

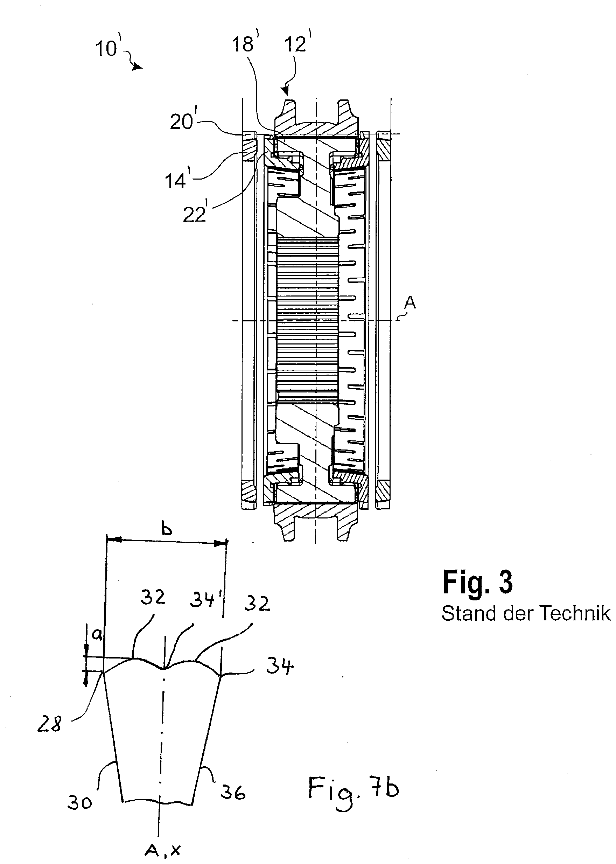

Die Figuren 7a und 7b zeigen Kupplungskörperzähne 20 in Radialrichtung gesehen mit unterschiedlichen Ausführungsvarianten konvexer Stirnflächen, wobei bei den Ausführungsformen nach Figur 7a eine einzige konvexe Stirnfläche und bei Figur 7b zwei konvexe Stirnflächen die gesamte Stirnseite definieren. Bei Figur 7a erstreckt sich die singuläre konvexe Stirnfläche in Umfangsrichtung jeweils von einem ersten Fußpunkt 28 angrenzend an eine seitliche Zahnflanke 30 des Kupplungskörperzahns 20 über einen axial vorstehenden Scheitelabschnitt 32 (insbesondere Scheitelpunkt), der den axial vordersten Punkt des Zahns 20 bildet, bis zu einem zweiten Fußpunkt 34 angrenzend an eine gegenüberliegende Zahnflanke 36 des Kupplungskörperzahns 20. Ferner beträgt ein axialer Abstand a zwischen dem Scheitelabschnitt 32 (insbesondere Scheitelpunkt) und jedem der Fußpunkte 28, 34 höchstens 18 %, insbesondere höchstens 10 % einer Zahnbreite b des Kupplungskörperzahns 20. Die Zahnbreite entspricht dabei einer in Umfangsrichtung gemessenen, das heißt tangentialen Abmessung des Kupplungskörpers 20 und liegt vorzugsweise in der Größenordnung von etwa 2 mm.

Unter einer konvexen Stirnfläche ist im Rahmen dieser Anmeldung allgemein eine von den Fußpunkten 28, 34 ausgehende, axial nach außen vorspringende, gewölbte und durch den Scheitelabschnitt 32 (insbesondere den Scheitelpunkt) verlaufende Fläche zu verstehen, wobei die Wölbung in Radialrichtung gesehen durch eine stetige Krümmung (siehe Figur 7, linke Abbildung), einen Polygonzug (siehe Figur 7, rechte Abbildung) oder Mischformen hiervon (siehe Figur 7, mittlere Abbildung) gebildet oder angenähert sein kann.

Die konvexe Stirnfläche ist in den dargestellten Ausführungsbeispielen jeweils zylindrisch, genauer gesagt als zylindrische Teilfläche ausgeführt, wobei jedoch auch eine leichte Krümmung in radialer Richtung denkbar wäre, sodass sich eine doppelt gekrümmte Fläche ergibt.

Bei allen in Figur 7a dargestellten Ausführungsvarianten der Kupplungskörperzähne 20 ist jeweils die singuläre konvexe Stirnfläche in Radialrichtung gesehen spiegelsymmetrisch zur axialen Zahnmittelachse X ausgebildet. Damit ergibt sich eine Symmetrie in Umfangsrichtung.

Ferner weist die konvexe Stirnfläche jeweils in Umfangsrichtung mittig einen Stirnflächenabschnitt 38 auf, der sich senkrecht zur Getriebeachse A erstreckt (siehe Figur 7, mittlere und rechte Abbildung) oder dessen Tangente 40 sich senkrecht zur Getriebeachse A erstreckt (siehe Figur 7, linke Abbildung).

Insbesondere kann die konvexe Stirnfläche in Radialrichtung gesehen vom Fußpunkt 28 zum Fußpunkt 34 durch einen Mantelabschnitt eines Kreiszylinders gebildet ist sein, wobei ein Radius des Kreiszylinders wenigstens 2 mm beträgt.

Bei der Ausführungsform nach Figur 7b sind zwei nebeneinanderliegende konvexe Stirnflächen 32 vorhanden. Die erste (linke) Stirnfläche beginnt am zuvor schon erwähnten ersten Fußpunkt 28 und erstreckt sich als Rundung bis zu einem zweiten Fußpunkt 34', der z.B. exakt in der Zahnmittelachse X liegt. Dieser Fußpunkt 38' ist der Talpunkt einer Einbuchtung zwischen den konvexen Stirnflächen. Die zweite Stirnfläche 32 (rechts) erstreckt sich vom zweiten Fußpunkt 38' zum bereits erläuterten Fußpunkt 34 an der entgegengesetzten Zahnflanke. Die Einbuchtung ist eine stetig gekrümmte konkave Fläche,

Die Zahnflanken verlaufen hier von der Mitte aus radial nach außen voneinander weg, was auch bei den Ausführungsformen nach Figur 7a der Fall sein kann.

Zu betonen ist, dass bezüglich der zuvor im Zusammenhang mit den Ausführungsformen nach Figur 7a genannten verschiedenen Formen der Stirnflächen und der Abmessungen, insbesondere der axiale Abstand a zwischen dem Scheitelabschnitt 32 (insbesondere Scheitelpunkt) und jedem der Fußpunkte 28, 34, auch bei der Variante nach Figur 7b Anwendung finden können oder die Ausführungsform nach Figur 7b entsprechend veränderbar ist. Abhängig von den jeweiligen Randbedingungen sind alternativ für die Varianten nach den Figuren 7a und 7b auch Ausführungsvarianten denkbar, bei denen die zumindest eine konvexe Stirnfläche in Radialrichtung gesehen unsymmetrisch zur axialen Zahnmittelachse X ausgebildet ist. Auch in diesen Fällen kann die konvexe Stirnfläche oder die beiden konvexen Stirnflächen einen Stirnflächenabschnitt 38 aufweisen, der sich senkrecht zur Getriebeachse A erstreckt oder dessen Tangente 40 sich senkrecht zur Getriebeachse A erstreckt, wobei dieser Stirnflächenabschnitt 38 mit Bezug auf die Zahnmittelachse X in Umfangsrichtung dann bevorzugt außermittig angeordnet ist.

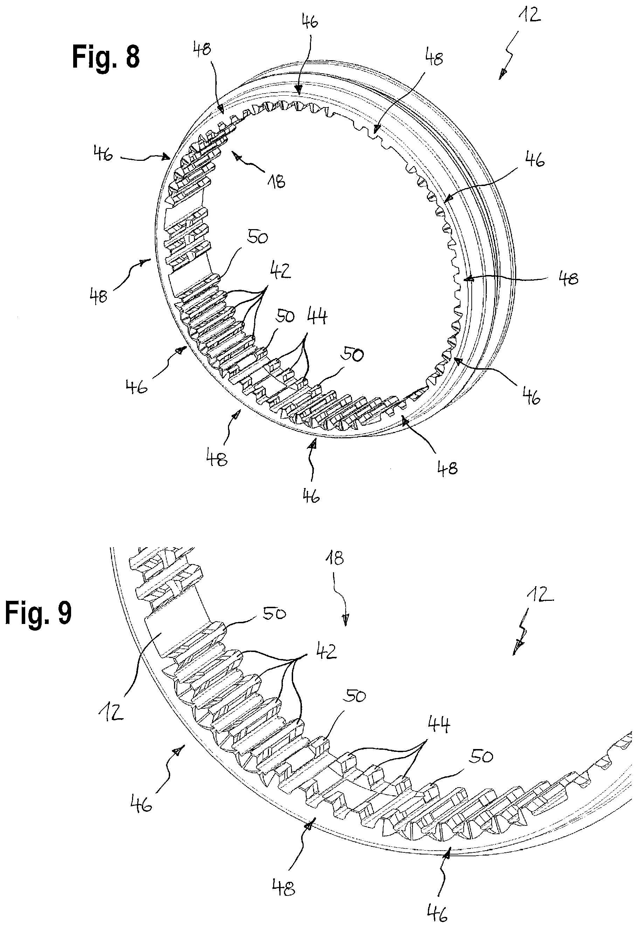

Die Figur 8 zeigt eine perspektivische Detailansicht der Schiebemuffe 12 der Synchronisiervorrichtung 10 gemäß Figur 4, während in Figur 9 ein Detailausschnitt im Bereich der Innenverzahnung der Schiebemuffe 12 dargestellt ist.

Die Innenverzahnung der Schiebemuffe 12 weist dabei Sperrzähne 42 mit in Umfangsrichtung beidseitig angespitzten axialen Zahnenden sowie Einspurzähne 44 mit stumpfen axialen Zahnenden auf.

Ferner lässt sich anhand der Figuren 8 und 9 erkennen, dass sich Sperrzahngruppen 46 mit jeweils mehreren in Umfangsrichtung unmittelbar nebeneinanderliegenden Sperrzähnen 42 sowie Einspurzahngruppen 48 mit jeweils mehreren in Umfangsrichtung unmittelbar nebeneinanderliegenden Einspurzähnen 44 in Umfangsrichtung abwechseln.

Ferner weist die Innenverzahnung der Schiebemuffe 12 in der dargestellten Ausführungsform in Umfangsrichtung zwischen den Sperrzahngruppen 46 und den Einspurzahngruppen 48 jeweils einen Übergangszahn 50 auf, wobei ein axiales Zahnende jedes Übergangszahns 50 in Umfangsrichtung etwa mittig geteilt ist und geometrisch auf der an die Sperrzahngruppe 46 angrenzenden Seite dem Zahnende eines Sperrzahns 42 sowie auf der an die Einspurzahngruppe 48 angrenzenden Seite dem Zahnende eines Einspurzahns 44 entspricht.

Aufgrund dieser Anordnung von Sperrzähnen 42, Einspurzähnen 44 und Übergangszähnen 50 mit geometrisch jeweils unterschiedlichen Zahnenden ist eine Herstellung der Schiebemuffe 12 durch spanende oder umformende Bearbeitungsverfahren recht aufwendig, sodass die Schiebemuffe 12 im vorliegenden Ausführungsbeispiel als Sinterbauteil ausgeführt ist. Generell ist jedoch auch denkbar, die Schiebemuffe 12 als Frästeil oder Umformteil aus Stahlblech herzustellen.

Die axialen Zahnenden der Sperrzähne 42 und die axialen Zahnenden der Einspurzähne 44 liegen dabei im Wesentlichen in einer gemeinsamen Ebene E, welche sich senkrecht zur Getriebeachse A erstreckt.

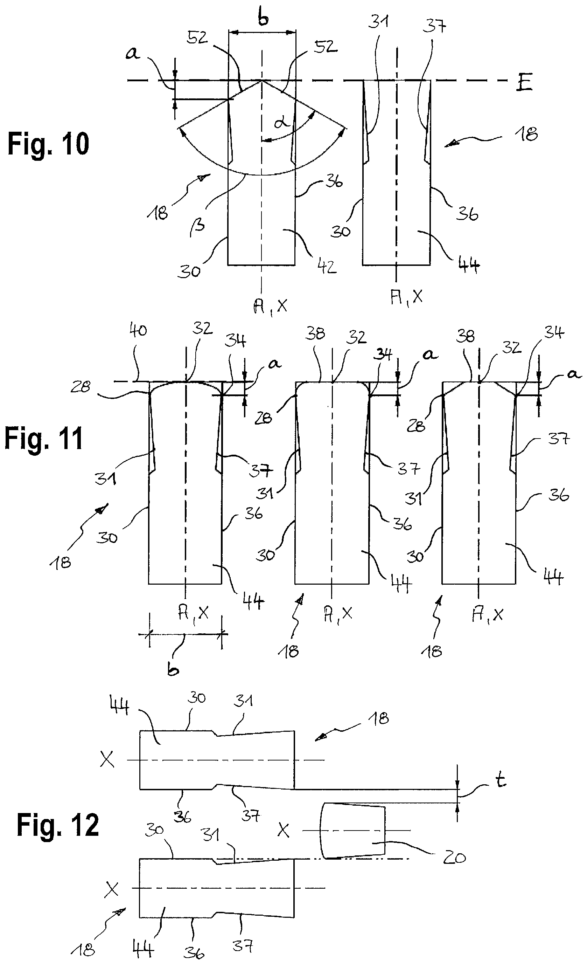

Dies ist auch in Figur 10 angedeutet, die einen axialen Endbereich eines Sperrzahns 42 und eines Einspurzahns 44 der Schiebemuffe 12 gemäß den Figuren 8 und 9 in Radialrichtung gesehen abbildet.

Die in Umfangsrichtung beidseitig angespitzten axialen Zahnenden der Sperrzähne 42 weisen gemäß Figur 10 Sperrschrägen 52 auf, die mit der Getriebeachse A einen Winkel α einschließen, der maximal 60° beträgt. Die beiden Sperrschrägen 52 bilden dementsprechend eine Dachform mit einem Dachwinkel β aus, wobei gilt: β = 2α.

Der axiale Abstand zwischen dem Schnittpunkt der beiden Sperrschrägen 52 und dem Schnittpunkt einer Sperrschräge 52 mit einer angrenzenden Zahnflanke 36 beträgt hier im Übrigen deutlich mehr als 18 % der Zahnbreite b des jeweiligen Schiebemuffenzahns 18.

Im Gegensatz zu den Sperrzähnen 42 weisen die stumpfen Zahnenden der Einspurzähne 44 gemäß Figur 10 eine ebene Stirnfläche auf, die senkrecht zur Getriebeachse A verläuft.

Ein geringes Verdrehflankenspiel zwischen der Schiebemuffe 12 und dem Kupplungskörper 14 ist bei dieser einfachen, komplett ebenen Stirnflächenausführung der Einspurzähne 44 nur deshalb möglich, weil die Kupplungskörperzähne 20, wie oben beschrieben, eine konvexe Stirnfläche aufweisen.

Die Figur 11 zeigt alternative Ausführungsvarianten für die Einspurzähne 44 der Schiebemuffe 12, bei denen die stumpfen Zahnenden der Einspurzähne 44 eine konvexe Stirnfläche aufweisen. Die konvexe Stirnfläche erstreckt sich dabei in Umfangsrichtung jeweils von einem Fußpunkt 28 angrenzend an eine Zahnflanke 30 des Schiebemuffenzahns 18, konkret an einen Hinterlegungsabschnitt 31 der Zahnflanke 30, über einen axial vorstehenden Scheitelabschnitt 32 bis zu einem Fußpunkt 34 angrenzend an eine entgegengesetzte Zahnflanke 36 des Schiebemuffenzahns 18, konkret an einen Hinterlegungsabschnitt 37 der Zahnflanke 36. Dabei beträgt der axiale Abstand a zwischen dem Scheitelabschnitt 32 und jedem der Fußpunkte 28, 34 maximal 18 %, insbesondere maximal 10 % einer Zahnbreite b des Schiebemuffenzahns 18, wobei die Zahnbreite b der in Umfangsrichtung gemessenen, tangentialen Abmessung des Schiebemuffenzahns 18 entspricht und in der Größenordnung von etwa 2 mm liegt.

Die angegebene konvexe Kontur des Zahnendes eines Einspurzahns 44 entspricht damit der konvexen Kontur des Zahnendes eines Kupplungskörperzahns 20, wie sie anhand der Figur 7 bereits beschrieben wurde, so dass auf obige Ausführungen verwiesen werden kann.

Alternativ oder zusätzlich zur konvex ausgebildeten Stirnfläche der Kupplungskörperzähne 20 gemäß Figur 7a und 7b können folglich auch die Stirnflächen der Einspurzähne 44 gemäß Figur 11 konvex ausgeführt sein. Ein gewünschtes, das heißt geringes Verdrehflankenspiel zwischen der Schiebemuffe 12 und dem Kupplungskörper 14 lässt sich bereits realisieren, wenn entweder die Zahnenden der Kupplungskörperzähne 20 oder die Zahnenden der Einspurzähne 44 eine konvexe Stirnfläche aufweisen.

Werden sowohl die Zahnenden der Kupplungskörperzähne 20 als auch die Zahnenden der Einspurzähne 44 mit einer konvexen Stirnfläche ausgebildet, lässt sich das Verdrehflankenspiel in vorteilhafter Weise weiter verringern, wenn auch nur noch vergleichsweise geringfügig. Die Figur 12 veranschaulicht das Verdrehflankenspiel zwischen den Schiebemuffenzähnen 18 und den Kupplungskörperzähnen 20, welches maximal 1°, insbesondere maximal 0,25° beträgt. Für derzeit gängige Durchmesser der Schiebemuffe 12 und des Kupplungskörpers 14 entspricht dieses Verdrehflankenspiel im Bogenmaß einem Tangentialspiel t ≈ 0,2 mm.

Im Vergleich zu herkömmlichen Synchronisiervorrichtungen mit angespitzten Zahnenden lässt sich durch die konvexen Stirnflächen der Kupplungskörperzähne 20 und/oder der Einspurzähne 44 außerdem die axiale Baulänge der Synchronisiervorrichtung 10 deutlich verringern.

Im Ausführungsbeispiel gemäß Figur 4 weisen die Synchronisiervorrichtung 10 eine Nabe 58 und die Synchronisiereinheit ein Druckstück 26 zur Vorsynchronisierung auf, wobei die Nabe 58 einen Nabenflansch 60 sowie einen Nabensteg 62 umfasst. Das konkret dargestellte Druckstück 26 hat dabei eine große radiale Abmessung und erstreckt sich vom Nabenflansch 60 bis in den Nabensteg 62. Selbstverständlich ist im Rahmen der vorliegenden Erfindung auch denkbar, ein in radialer Richtung besonders kompakt bauendes Druckstück 26 einzusetzen, das ausschließlich im Nabenflansch 60 aufgenommen ist und sich nicht in den Nabensteg 62 erstreckt. Ein solches Druckstück 26 ist beispielsweise aus der EP 1 715 210 B1 bekannt und führt zu einer geringeren Schwächung des Nabenstegs 62 der Nabe 58, sodass dessen axiale Abmessung reduziert werden kann. Auf diese Weise lässt sich durch die Verwendung eines radial besonders kompakten Druckstücks 26 die axiale Baulänge der Synchronisiervorrichtung 10 gegebenenfalls noch weiter verringern.

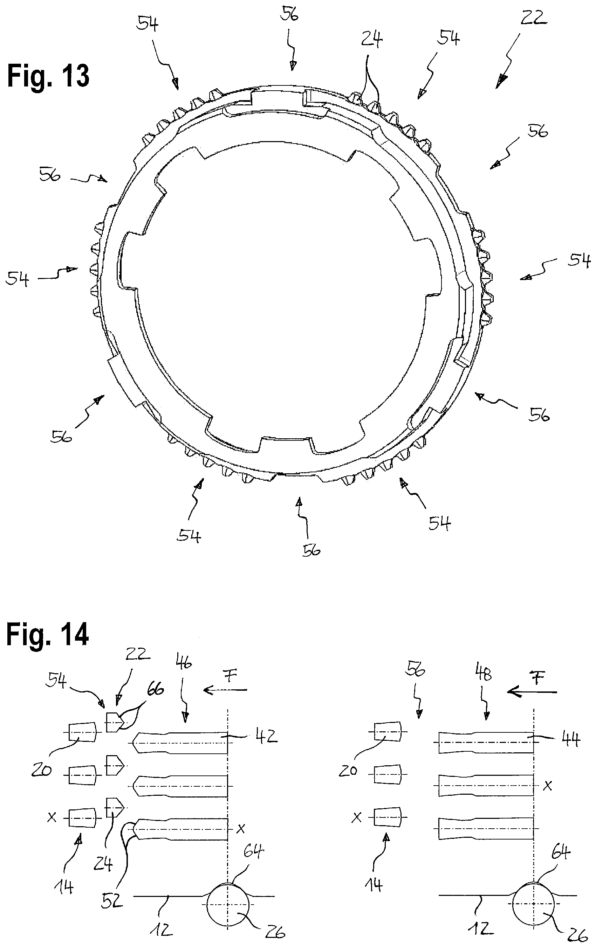

Die Figur 13 zeigt eine perspektivische Detailansicht des Synchronrings 22 der Synchronisiervorrichtung 10 gemäß Figur 4.

In Umfangsrichtung gesehen weist der Synchronring 22 gezahnte Ringsegmente 54 mit Synchronringzähnen 24 sowie zahnlose Ringsegmente 56 ohne Synchronringzähne 24 auf. Gemäß Figur 13 sind die zahnlosen Ringsegmente 56 dort vorgesehen, wo sogenannte Indexlappen zur Festlegung einer begrenzten Relativdrehung des Synchronrings 22 oder Axialanschläge zur Schaltwegbegrenzung bzw. Aussparungen für Axialanschlagelemente 57 an den Synchronring 22 angeformt sind.

Im zusammengesetzten Zustand der Synchronisiervorrichtung 10 sind die Schiebemuffe 12 und der Synchronring 22 in Umfangsrichtung so zueinander ausgerichtet, dass jede Sperrzahngruppe 46 der Schiebemuffe 12 axial angrenzend an ein gezahntes Ringsegment 54 und jede Einspurzahngruppe 48 der Schiebemuffe 12 axial angrenzend an ein zahnloses Ringsegment 56 des Synchronrings 22 angeordnet ist (siehe auch Figur 4).

Die Figuren 14 bis 17 veranschaulichen einen Schaltvorgang der Synchronisiervorrichtung 10 sowie ein Synchronisationsverfahren zum Schalten eines Getriebes mit einer solchen Synchronisiervorrichtung 10. Dabei ist auf der linken Seite jeweils ein Abwicklungsausschnitt der Synchronisiervorrichtung 10 im Bereich einer Sperrzahngruppe 46 der Schiebemuffe 12 sowie eines axial angrenzenden gezahnten Ringsegments 54 des Synchronrings 22 abgebildet und auf der rechten Seite jeweils ein Abwicklungsausschnitt der Synchronisiervorrichtung 10 im Bereich einer Einspurzahngruppe 48 der Schiebemuffe 12 sowie eines axial angrenzenden zahnlosen Ringsegments 56 des Synchronrings 22.

Die Figur 14 zeigt einen Zustand vor Beginn des Schaltvorgangs in einer axial mittigen Neutralstellung der Schiebemuffe 12. Die axialen Zahnenden der Schiebemuffenzähne 18 sind sowohl von den Synchronringzähnen 24 als auch von den Kupplungskörperzähnen 20 axial beabstandet.

Wie bei einer herkömmlichen Synchronisiervorrichtung 10' dreht sich die Schiebemuffe 12 mit der Welle, während das Gangrad, an dem der Kupplungskörper 14 befestigt ist, eine von der Schiebemuffe 12 verschiedene Drehzahl aufweist. Die Kugel des Druckstücks 26 greift in eine Nut 64 an der Innenseite der Schiebemuffe 12 ein, wie dies im unteren Bereich der Figur 14 angedeutet ist.

Im dargestellten Ausführungsbeispiel sind die Stirnflächen aller Kupplungskörperzähne 20 konvex ausgebildet, wie bereits oben anhand der Figur 7 beschrieben. Um einen scharfkantigen Übergang zwischen den Stirnflächen und den Zahnflanken 30, 36 zu vermeiden, können im Bereich der Fußpunkte 28, 34 vorhandene Kanten oder Ecken innerhalb der Herstellungstoleranzen abgerundet oder angeschrägt sein.

Alle Kupplungskörperzähne 20 sind hier in axialer Richtung gleich lang und insbesondere identisch ausgebildet.

Die Schiebemuffenzähne 18 sind in axialer Richtung ebenfalls gleich lang und als Sperrzähne 42, als Einspurzähne 44 oder als Übergangszähne 50 ausgebildet, wobei die Sperrzähne 42 jeweils ein in Umfangsrichtung beidseitig angespitztes axiales Zahnende aufweisen. Die Einspurzähne 44 weisen jeweils ein stumpfes axiales Zahnende auf, wobei die Stirnfläche der stumpfen Zahnenden im vorliegenden Ausführungsbeispiel insbesondere eben ist und senkrecht zur Getriebeachse A verläuft.

Alternativ ist jedoch auch denkbar, dass die Stirnflächen der Einspurzähne 44 konvex ausgebildet sind, wie bereits oben anhand der Figur 11 beschrieben. Um einen scharfkantigen Übergang zwischen den Stirnflächen und den Zahnflanken 30, 36 zu vermeiden, können auch hier im Bereich der Fußpunkte 28, 34 vorhandene Kanten oder Ecken innerhalb der Herstellungstoleranzen abgerundet oder angeschrägt sein.

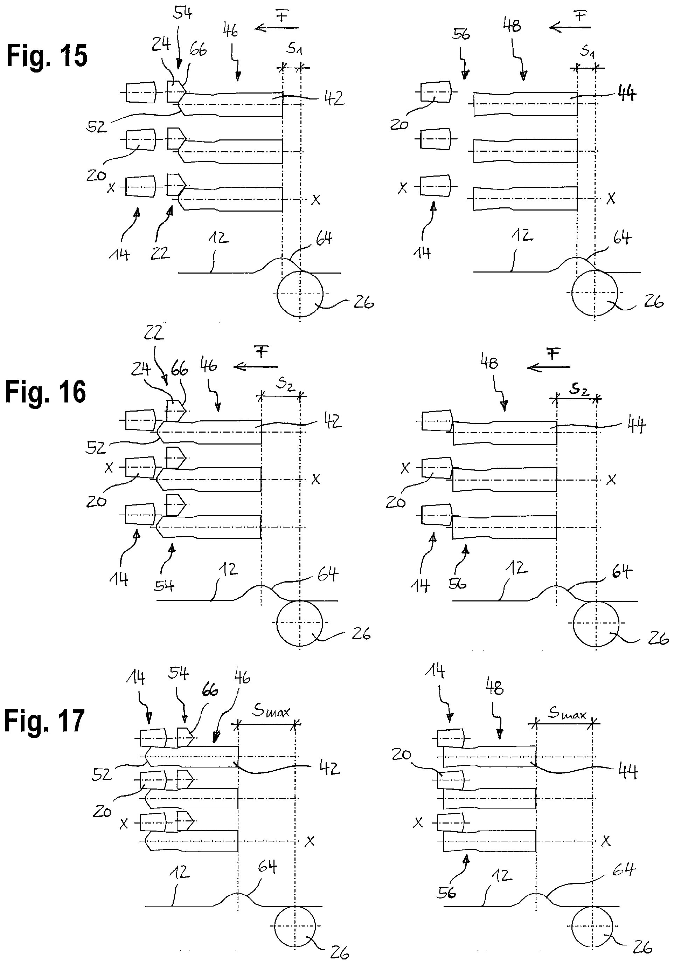

In der in Figur 14 gezeigten Neutralstellung ist ein von der Schiebemuffe 12 zurückgelegter Schaltweg S noch gleich Null. Wird die Schiebemuffe 12 durch eine axiale Schaltkraft F axial in Richtung zum Kupplungskörper 14 hin verschoben, so wirkt die Vorsynchroneinheit auf den Synchronring 22 ein und drückt diesen auf eine gangradseitige Reibfläche. Dabei legt die Schiebemuffe 12 einen Schaltweg S₁ zurück, und der Synchronring 22 wird in seine Sperrstellung gemäß Figur 15 verstellt. Die Sperrzähne 42 der Schiebemuffe 12 drücken in der Sperrstellung auf die Synchronringzähne 24 und der Drehzahlangleich zwischen der Schiebemuffe 12 und dem Kupplungskörper erfolgt. Sind die Drehzahlen synchronisiert, ist ein weiteres axiales Verschieben der Schiebemuffe 12 in Richtung zum Kupplungskörper 14 hin möglich, wobei die Sperrzähne 42 in die Zwischenräume der Synchronringzähne 24 gleiten. Diese Bewegung wird durch beidseitige Schrägflächen 66 an den Synchronringzähnen 24 unterstützt, die im Wesentlichen parallel zu den Sperrschrägen 52 der Sperrzähne 42 ausgeführt sind und an diesen entlang gleiten können, um die Synchronringzähne 24 in die Zahnzwischenräume der Sperrzähnen 42 zu führen.

Der synchronisierte Zustand nach dem Einspuren der Innenverzahnung der Schiebemuffe 12 in die Außenverzahnung des Synchronrings 22 ist in Figur 16 dargestellt. Die Schiebemuffe 12 hat nun einen Schaltweg S₂ zurückgelegt, wobei die Nut 64 der Schiebemuffe 12 über die Kugel des Druckstücks 26 hinweg geglitten ist.

Die Einspurzähne 44 der Schiebemuffe 12 sind während der Drehzahlsynchronisierung ohne Funktion, da die Einspurzahngruppen 48 axial an zahnlose Ringsegmente 56 des Synchronrings 22 angrenzen und somit nicht mit Synchronringzähnen 24 zusammenwirken.

Nach der Synchronisierung können gemäß Figur 16 (rechts) jedoch die stumpfen Zahnenden der Einspurzähne 44 und die konvexen Stirnflächen der Kupplungskörperzähne 20 direkt aufeinander treffen, sodass ein Einspuren der Schiebemuffenzähne 18 zwischen die Kupplungskörperzähne 20 nicht möglich ist. Die Schiebemuffe 12 wird hierbei durch die axiale Schaltkraft F gegen den Kupplungskörper 14 beaufschlagt.

In diesem Fall muss erneut eine geringe Differenzdrehzahl zwischen der Schiebemuffe 12 und dem Kupplungskörper 14 aufgebaut werden. Die Drehzahldifferenz kann minimal sein, da lediglich ein Versatz in Umfangsrichtung erzeugt werden muss, der dafür sorgt, dass die Stirnflächen der Schiebemuffenzähne 18 auf die Zahnzwischenräume der Kupplungskörperzähne 20 treffen.

Die Drehzahldifferenz wird im vorliegenden Ausführungsbeispiel aktiv durch wenigstens eine der folgenden Maßnahmen hergestellt:
- Erhöhen eines Kühlölstroms im Getriebe;
- Ansynchronisieren eines weiteren Gangrads des Getriebes, das nicht mit dem Kupplungskörper 14 drehfest verbunden ist;
- Ansteuern einer Wellenbremse des Getriebes;
- Ansteuern eines Elektromotors.

Durch einen Anstieg des Kühlölstroms werden die Schleppmomente aktiv erhöht, sodass sich rasch eine Drehzahldifferenz einstellt.

Durch kurzes Ansynchronisieren eines Gangrads, das nicht der zu schaltenden Gangstufe zugeordnet, aber im Getriebe vorhanden ist, lässt sich ebenfalls sehr schnell eine Drehzahldifferenz aufbauen. Gleiches gilt für das Ansteuern einer Wellenbremse des Getriebes, bei der die Drehzahl über eine Reibverbindung mit einem gehäusefesten Bauteil verringert wird.

Die Ansteuerung des Elektromotors ist insbesondere bei Hybridfahrzeugen interessant, da hier sowieso ein Elektromotor vorgesehen ist. In diesem Fall wird der Verbrennungsmotor vom Getriebe entkoppelt und der Elektromotor zur Drehzahlsynchronisierung kurz angeschlossen, bis der gewünschte Gang geschaltet ist. Anschließend kann der Elektromotor wieder entkoppelt und der Verbrennungsmotor erneut an das Getriebe angeschlossen werden.

Zur Durchführung dieser Maßnahmen umfasst das Schaltgetriebe die Synchronisiervorrichtung 10 und eine Getriebesteuerung, die einen ersten Aktuator zum axialen Verschieben der Schiebemuffe 12 und einen zweiten Aktuator zum Herstellen einer Drehzahldifferenz zwischen der Schiebemuffe 12 und dem Kupplungskörper 14 aufweist.

Durch die Drehzahldifferenz zwischen der Schiebemuffe 12 und dem Kupplungskörper 14 gleiten die Stirnflächen der Schiebemuffenzähne 18 und der Kupplungskörperzähne 20 umfangsmäßig aneinander entlang, bis die Stirnflächen der Schiebemuffenzähne 18, insbesondere der Einspurzähne 44 axial an Zahnzwischenräume der Außenverzahnung des Kupplungskörper 14 angrenzen und aufgrund der Schaltkraft F zwischen die Kupplungskörperzähne 20 einspuren können.

Der komplett eingespurte Zustand ist in Figur 17 gezeigt, wenn der maximale Schaltweg Sₘₐₓ zurückgelegt wurde. Die Kupplungskörperzähne 20 befinden sich nun in ihrer maximalen Einschubtiefe zwischen den Schiebemuffenzähnen 18.

Obwohl die Erfindung hier anhand eines konkreten Ausführungsbeispiels der Synchronisiervorrichtung 10 erläutert wird, ist klar, dass sich der Grundgedanke der vorliegenden Erfindung ohne Weiteres auch auf andere Synchronisationssysteme übertragen lässt, wie sie beispielsweise in der EP 2 137 423 B1, der WO 2011/054494 A1, der WO 2012/028316 A1 oder der EP 0 812 398 B1 beschrieben sind.

Insbesondere wäre auch eine Verwendung der vorliegenden Erfindung für Synchronisationssysteme denkbar, bei denen die Synchronisiervorrichtung 10 kraftgesteuert und die Synchronisiereinheit folglich so ausgebildet ist, dass die Blockierung der Axialbewegung der Schiebemuffe 12 bei Überschreiten einer vorbestimmten Maximalkraft aufgehoben wird.

## Patentansprüche

1. Synchronisiervorrichtung für ein Schaltgetriebe, mit
einer Schiebemuffe (12), die eine Innenverzahnung mit einer Vielzahl von Schiebemuffenzähnen (18) aufweist und um eine Getriebeachse (A) drehbar ist,
einem Kupplungskörper (14) eines Gangrads, der eine Außenverzahnung mit einer Vielzahl von Kupplungskörperzähnen (20) hat, in die die Innenverzahnung der Schiebemuffe (12) eingreifen kann, sowie
einer Synchronisiereinheit, die eine axiale Bewegung der Schiebemuffe (12) blockieren kann,
**dadurch gekennzeichnet, dass** die Kupplungskörperzähne (20) an ihrem an die Schiebemuffe (12) angrenzenden axialen Zahnende und/oder zumindest einige der Schiebemuffenzähne (18) an ihrem an den Kupplungskörper (14) angrenzenden axialen Zahnende jeweils eine einzige oder jeweils mehrere konvexe Stirnflächen aufweisen,
wobei sich die eine einzige konvexe Stirnfläche oder eine der mehreren konvexen Stirnflächen in Umfangsrichtung jeweils von einem ersten Fußpunkt (28) angrenzend an eine Zahnflanke (30) des jeweiligen Zahns (18, 20) über einen axial vorstehenden Scheitelabschnitt (32) bis zu einem zweiten Fußpunkt (34) erstreckt, wobei der zweite Fußpunkt bei einer einzigen konvexen Stirnfläche an eine entgegengesetzte Zahnflanke (36) des Zahns (18, 20) angrenzt und bei mehreren konvexen Stirnflächen ein Talpunkt einer Einbuchtung zwischen benachbarten konvexen Stirnflächen ist, und
wobei ein axialer Abstand (a) zwischen dem Scheitelabschnitt (32) und jedem der Fußpunkte (28, 34) höchstens 18%, insbesondere höchstens 10% einer Zahnbreite (b) des Zahns (18, 20) beträgt.

2. Synchronisiervorrichtung nach Anspruch 1, **dadurch gekennzeichnet, dass** die einzige konvexe Stirnfläche in Radialrichtung gesehen spiegelsymmetrisch zur axialen Zahnmittelachse (X) ausgebildet ist und die mehreren axialen Stirnflächen in Radialrichtung gesehen zueinander spiegelsymmetrisch zur axialen Zahnmittelachse (X) liegen.

3. Synchronisiervorrichtung nach Anspruch 1 oder 2, **dadurch gekennzeichnet, dass** die zumindest eine konvexe Stirnfläche zylindrisch ist.

4. Synchronisiervorrichtung nach einem der vorhergehenden Ansprüche, **dadurch gekennzeichnet, dass** die weinigstens eine konvexe Stirnfläche in Radialrichtung gesehen von Fußpunkt (28) zu Fußpunkt (34) durch einen Mantelabschnitt eines Kreiszylinders gebildet ist.

5. Synchronisiervorrichtung nach einem der vorhergehenden Ansprüche, **dadurch gekennzeichnet, dass** die die einzige oder die mehreren konvexen Stirnflächen jeweils einen Stirnflächenabschnitt (38) aufweisen, der sich senkrecht zur Getriebeachse (A) erstreckt oder dessen Tangente (40) sich senkrecht zur Getriebeachse (A) erstreckt.

6. Synchronisiervorrichtung nach einem der vorhergehenden Ansprüche, **dadurch gekennzeichnet, dass** eine axiale Abmessung der Kupplungskörperzähne (20) maximal 3 mm beträgt und/oder dass ein Verdrehflankenspiel zwischen der Schiebemuffe (12) und dem Kupplungskörper (14) maximal 1°, insbesondere maximal 0,25° beträgt.

7. Synchronisiervorrichtung nach einem der vorhergehenden Ansprüche, **dadurch gekennzeichnet, dass** zumindest einige der Schiebemuffenzähne (18) an ihrem an den Kupplungskörper (14) angrenzenden Zahnende eine Stirnfläche aufweisen, die eben ist und senkrecht zur Getriebeachse (A) verläuft.

8. Synchronisiervorrichtung nach einem der vorhergehenden Ansprüche, **dadurch gekennzeichnet, dass** die Synchronisiervorrichtung (10) kraftgesteuert ist, wobei die Synchronisiereinheit so ausgebildet ist, dass die Blockierung der Axialbewegung der Schiebemuffe (12) bei Überschreiten einer vorbestimmten Maximalkraft aufgehoben wird.

9. Synchronisiervorrichtung für ein Schaltgetriebe nach einem der vorhergehenden Ansprüche,
wobei die Synchronisiereinheit einen Synchronring (22) umfasst, welcher eine Außenverzahnung mit einer Vielzahl von Synchronringzähnen (24) hat und eine axiale Bewegung der Schiebemuffe (12) blockieren kann,
wobei die Innenverzahnung der Schiebemuffe (12) Sperrzähne (42) mit einem in Umfangsrichtung beidseitig angespitzten axialen Zahnende sowie Einspurzähne (44) mit einem stumpfen axialen Zahnende aufweist, und
wobei sich Sperrzahngruppen (46) von mehreren in Umfangsrichtung unmittelbar nebeneinanderliegenden Sperrzähnen (42) sowie Einspurzahngruppen (48) von mehreren in Umfangsrichtung unmittelbar nebeneinanderliegenden Einspurzähnen (44) in Umfangsrichtung abwechseln.

10. Synchronisiervorrichtung nach Anspruch 9, **dadurch gekennzeichnet, dass** der Synchronring (22) in Umfangsrichtung gezahnte Ringsegmente (54) mit Synchronringzähnen (24) sowie zahnlose Ringsegmente (56) ohne Synchronringzähne (24) aufweist, wobei jede Sperrzahngruppe (46) der Schiebemuffe (12) axial angrenzend an ein gezahntes Ringsegment (54) und jede Einspurzahngruppe (48) der Schiebemuffe (12) axial angrenzend an ein zahnloses Ringsegment (56) angeordnet ist.

11. Synchronisiervorrichtung nach Anspruch 9 oder 10, **dadurch gekennzeichnet, dass** die Zahnenden der Sperrzähne (42) und die Zahnenden der Einspurzähne (44) im Wesentlichen in einer gemeinsamen Ebene (E) liegen, die sich senkrecht zur Getriebeachse (A) erstreckt.

12. Synchronisiervorrichtung nach einem der Ansprüche 9 bis 11, **dadurch gekennzeichnet, dass** die stumpfen Zahnenden der Einspurzähne (44) entweder eine Stirnfläche aufweisen, die eben ist und senkrecht zur Getriebeachse (A) verläuft, oder eine einzige oder mehrere konvexe Stirnflächen, wobei sich die einzige konvexe Stirnfläche oder eine der mehreren konvexen Stirnflächen jeweils in Umfangsrichtung von einem ersten Fußpunkt (28) angrenzend an eine Zahnflanke (30) des Schiebemuffenzahns (18) über einen axial vorstehenden Scheitelabschnitt (32) bis zu einem zweiten Fußpunkt (34) erstreckt, wobei der zweite Fußpunkt bei einer einzigen konvexen Stirnfläche an eine entgegengesetzte Zahnflanke (36) des Zahns (18, 20) angrenzt und bei mehreren konvexen Stirnflächen ein Talpunkt einer Einbuchtung zwischen benachbarten konvexen Stirnflächen ist, und wobei ein axialer Abstand (a) zwischen dem Scheitelabschnitt (32) und jedem der Fußpunkte (28, 34) höchstens 18%, insbesondere höchstens 10% einer Zahnbreite (b) des Schiebemuffenzahns (18) beträgt.

13. Synchronisiervorrichtung nach einem der Ansprüche 9 bis 12, **dadurch gekennzeichnet, dass** die in Umfangsrichtung beidseitig angespitzten axialen Zahnenden der Sperrzähne (42) Sperrschrägen (52) aufweisen, die mit der Getriebeachse (A) einen Winkel (α) einschließen, der maximal 70° beträgt.

14. Synchronisiervorrichtung nach einem der Ansprüche 9 bis 13, **dadurch gekennzeichnet, dass** die Innenverzahnung der Schiebemuffe (12) in Umfangsrichtung zwischen den Sperrzahngruppen (46) und den Einspurzahngruppen (48) jeweils einen Übergangszahn (50) aufweist, wobei ein axiales Zahnende jedes Übergangszahns (50) in Umfangsrichtung etwa mittig geteilt ist und geometrisch auf der an die Sperrzahngruppe (46) angrenzenden Seite dem Zahnende eines Sperrzahns (42) sowie auf der an die Einspurzahngruppe (48) angrenzenden Seite dem Zahnende eines Einspurzahns (44) entspricht.

15. Synchronisationsverfahren zum Schalten eines Getriebes mit einer Synchronisiervorrichtung (10) nach einem der vorhergehenden Ansprüche, umfassend folgende Verfahrensschritte:
a) Angleichen der Drehzahlen der Schiebemuffe (12) und des Kupplungskörpers (14),
b) Aufbau einer axialen Kraft (F) der Schiebemuffe (12) in Richtung zum Kupplungskörper (14),
c) Herstellen einer Drehzahldifferenz zwischen der Schiebemuffe (12) und dem Kupplungskörper (14), sodass die Stirnflächen der Schiebemuffenzähne (18) und der Kupplungskörperzähne (20) umfangsmäßig aneinander entlang gleiten, wobei die Drehzahldifferenz durch wenigstens eine der folgenden Maßnahmen hergestellt wird:
- Erhöhen eines Kühlölstroms im Getriebe;
- Ansynchronisieren eines weiteren Gangrads des Getriebes, das nicht mit dem Kupplungskörper (14) drehfest verbunden ist;
- Ansteuern einer Wellenbremse des Getriebes;
- Ansteuern eines vom Antrieb der Schiebemuffe separaten Elektromotors;
d) Einspuren der Schiebemuffenzähne (18) zwischen die Kupplungskörperzähne (20).

## Claims

1. A synchronizer device for a manual transmission, comprising
a sliding sleeve (12) which includes an internal toothing having a multitude of sliding sleeve teeth (18) and is rotatable about a transmission axis (A),
a clutch body (14) of a speed change gear, the clutch body having an external toothing having a multitude of clutch body teeth (20) for the internal toothing of the sliding sleeve (12) to engage therein, and
a synchronizer unit which is adapted to block an axial movement of the sliding sleeve (12),
**characterized in that**
the clutch body teeth (20) at the axial tooth ends thereof adjacent to the sliding sleeve (12) and/or at least some of the sliding sleeve teeth (18) at the axial tooth ends thereof adjacent to the clutch body (14) each include one single convex end face or each include a plurality of convex end faces,
wherein the single convex end face or one of the plurality of convex end faces each extends in the circumferential direction from a first root point (28) adjacent to a tooth flank (30) of the respective tooth (18, 20) via an axially protruding apex portion (32) as far as to a second root point (34), the second root point adjoining an opposite tooth flank (36) of the tooth (18, 20) when there is one single convex end face and being a valley point of an indentation between neighboring convex end faces when there is a plurality of convex end faces, and
wherein an axial distance (a) between the apex portion (32) and each of the root points (28, 34) amounts to a maximum of 18%, in particular a maximum of 10%, of a tooth width (b) of the tooth (18, 20).

2. The synchronizer device according to claim 1, **characterized in that** the single convex end face, viewed in the radial direction, is formed to be mirror-symmetrical to the axial tooth centerline (X), and the plurality of axial end faces, viewed in the radial direction, are located in relation to each other so as to be mirror-symmetrical to the axial tooth centerline (X).

3. The synchronizer device according to claim 1 or 2, **characterized in that** the at least one convex end face is cylindrical.

4. The synchronizer device according to any of the preceding claims, **characterized in that** the at least one convex end face, viewed in the radial direction, is formed by a portion of a lateral surface of a circular cylinder from root point (28) to root point (34).

5. The synchronizer device according to any of the preceding claims, **characterized in that** the single convex end face or the plurality of convex end faces each include an end face portion (38) which extends perpendicularly to the transmission axis (A) or which has a tangent line (40) extending perpendicularly to the transmission axis (A).

6. The synchronizer device according to any of the preceding claims, **characterized in that** an axial dimension of the clutch body teeth (20) amounts to a maximum of 3 mm and/or **in that** a circumferential backlash between the sliding sleeve (12) and the clutch body (14) amounts to a maximum of 1 degree, in particular a maximum of 0.25 degrees.

7. The synchronizer device according to any of the preceding claims, **characterized in that** at least some of the sliding sleeve teeth (18), at the tooth ends thereof adjacent to the clutch body (14), include an end face which is flat and extends perpendicularly to the transmission axis (A).

8. The synchronizer device according to any of the preceding claims, **characterized in that** the synchronizer device (10) is force-controlled, the synchronizer unit being formed such that the blocking of the axial movement of the sliding sleeve (12) is overridden when a predetermined maximum force is exceeded.

9. A synchronizer device for a manual transmission according to any of the preceding claims,
wherein the synchronizer unit includes a synchronizer ring (22) which has an external toothing having a multitude of synchronizer ring teeth (24) and is adapted to block an axial movement of the sliding sleeve (12),
wherein the internal toothing of the sliding sleeve (12) includes locking teeth (42) each having an axial tooth end that is pointed on both sides in the circumferential direction and meshing teeth (44) each having a blunt axial tooth end, and
wherein locking tooth groups (46) of a plurality of locking teeth (42) that are directly adjacent to each other in the circumferential direction and meshing tooth groups (48) of a plurality of meshing teeth (44) that are directly adjacent to each other in the circumferential direction alternate in the circumferential direction.

10. The synchronizer device according to claim 9, **characterized in that** the synchronizer ring (22) includes, in the circumferential direction, toothed ring segments (54) having synchronizer ring teeth (24) and toothless ring segments (56) without synchronizer ring teeth (24), each locking tooth group (46) of the sliding sleeve (12) being arranged axially adjacent to a toothed ring segment (54) and each meshing tooth group (48) of the sliding sleeve (12) being arranged axially adjacent to a toothless ring segment (56).

11. The synchronizer device according to claim 9 or 10, **characterized in that** the tooth ends of the locking teeth (42) and the tooth ends of the meshing teeth (44) lie substantially in a common plane (E) which extends perpendicularly to the transmission axis (A).

12. The synchronizer device according to any of claims 9 to 11, **characterized in that** the blunt tooth ends of the meshing teeth (44) include either an end face which is flat and extends perpendicularly to the transmission axis (A) or one single or a plurality of convex end faces, the single convex end face or one of the plurality of convex end faces each extending in the circumferential direction from a first root point (28) adjacent to a tooth flank (30) of the sliding sleeve tooth (18) via an axially protruding apex portion (32) as far as to a second root point (34), the second root point adjoining an opposite tooth flank (36) of the tooth (18, 20) when there is one single convex end face and being a valley point of an indentation between neighboring convex end faces when there is a plurality of convex end faces, and an axial distance (a) between the apex portion (32) and each of the root points (28, 34) amounting to a maximum of 18%, in particular a maximum of 10%, of a tooth width (b) of the sliding sleeve tooth (18).

13. The synchronizer device according to any of claims 9 to 12, **characterized in that** the axial tooth ends of the locking teeth (42) that are pointed on both sides in the circumferential direction include locking bevels (52) which include an angle (α) with the transmission axis (A) that amounts to a maximum of 70 degrees.

14. The synchronizer device according to any of claims 9 to 13, **characterized in that** the internal toothing of the sliding sleeve (12) includes a respective transition tooth (50) between the locking tooth groups (46) and the meshing tooth groups (48) in the circumferential direction, an axial tooth end of each transition tooth (50) being divided approximately in the middle in the circumferential direction and geometrically corresponding to the tooth end of a locking tooth (42) on the side adjacent to the locking tooth group (46) and to the tooth end of a meshing tooth (44) on the side adjacent to the meshing tooth group (48).

15. A synchronization method for shifting a transmission having a synchronizer device (10) according to any of the preceding claims, comprising the following method steps of:
(a) matching the speeds of the sliding sleeve (12) and of the clutch body (14);
(b) building up an axial force (F) of the sliding sleeve (12) toward the clutch body (14);
(c) establishing a speed differential between the sliding sleeve (12) and the clutch body (14) so that the end faces of the sliding sleeve teeth (18) and of the clutch body teeth (20) slide circumferentially along each other, the speed differential being established by at least one of the following measures:
- increasing a cooling oil flow within the transmission;
- initiating synchronization of a further speed change gear of the transmission which is not connected to the clutch body (14) for joint rotation therewith;
- driving a shaft brake of the transmission;
- driving an electric motor which is separate from the drive of the sliding sleeve;
(d) causing the sliding sleeve teeth (18) to engage between the clutch body teeth (20).

## Revendications

1. Dispositif de synchronisation pour boîte de vitesses, comprenant
un manchon coulissant (12) qui présente une denture interne présentant une multitude de dents (18) de manchon coulissant, et qui est mobile en rotation autour d'un axe de boîte de vitesses (A),
un corps d'embrayage (14) d'un pignon de rapport, qui présente une denture externe présentant une multitude de dents (20) de corps d'embrayage, dans laquelle la denture interne du manchon coulissant (12) peut s'engager, et
une unité de synchronisation qui est apte à bloquer un mouvement axial du manchon coulissant (12),
**caractérisé en ce que**
les dents (20) de corps d'embrayage, à leur extrémité de dent axiale adjacente au manchon coulissant (12), et/ou au moins certaines des dents (18) de manchon coulissant, à leur extrémité de dent axiale adjacente au corps d'embrayage (14), présentent chacune une seule face frontale convexe ou présentent chacune plusieurs faces frontales convexes,
la seule face frontale convexe ou l'une des plusieurs faces frontales convexes s'étendant respectivement dans le sens circonférentiel depuis un premier point de base (28) adjacent à un flanc de dent (30) de la dent (18, 20) respective jusqu'à un deuxième point de base (34) via un tronçon de sommet (32) axialement en saillie, le deuxième point de base étant adjacent à flanc de dent opposé (36) de la dent (18, 20) dans le cas d'une seule face frontale convexe, et étant un point de creux d'un enfoncement entre des faces frontales convexes voisines dans le cas de plusieurs faces frontales convexes, et
une distance axiale (a) entre le tronçon de sommet (32) et chacun des points de base (28, 34) correspondant au maximum à 18%, en particulier au maximum à 10% d'une largeur de dent (b) de la dent (18, 20).

2. Dispositif de synchronisation selon la revendication 1, **caractérisé en ce que** la seule face frontale convexe, vue dans le sens radial, est réalisée à symétrie spéculaire par rapport à l'axe médian de dent axial (X), et **en ce que** les plusieurs faces frontales axiales, vues dans le sens radial, sont agencées à symétrie spéculaires les unes par rapport aux autres par rapport à l'axe médian de dent axial (X).

3. Dispositif de synchronisation selon la revendication 1 ou 2, **caractérisé en ce que** ladite au moins une face frontale convexe est cylindrique.

4. Dispositif de synchronisation selon l'une des revendications précédentes, **caractérisé en ce que** ladite au moins une face frontale convexe, vue dans le sens radial, est formée par un tronçon de surface latérale d'un cylindre circulaire du point de base (28) au point de base (34).

5. Dispositif de synchronisation selon l'une des revendications précédentes, **caractérisé en ce que** la seule face frontale convexe ou les plusieurs faces frontales convexes présentent chacune un tronçon de face frontale (38) qui s'étend perpendiculairement à l'axe de boîte de vitesses (A) ou dont la tangente (40) s'étend perpendiculairement à l'axe de boîte de vitesses (A).

6. Dispositif de synchronisation selon l'une des revendications précédentes, **caractérisé en ce qu'**une dimension axiale des dents (20) de corps d'embrayage s'élève au maximum à 3 mm et/ou **en ce qu'**un jeu circonférentiel de profil de dent entre le manchon coulissant (12) et le corps d'embrayage (14) s'élève au maximum à 1°, en particulier au maximum à 0,25°.

7. Dispositif de synchronisation selon l'une des revendications précédentes, **caractérisé en ce qu'**au moins certaines des dents (18) de manchon coulissant présentent à leur extrémité de dent adjacente au corps d'embrayage (14) une face frontale qui est plane et qui s'étend perpendiculairement à l'axe de boîte de vitesses (A).

8. Dispositif de synchronisation selon l'une des revendications précédentes, **caractérisé en ce que** le dispositif de synchronisation (10) est commandé par force, l'unité de synchronisation étant réalisée de telle sorte que le blocage du mouvement axial du manchon coulissant (12) est annulé lors du dépassement d'une force maximale prédéterminée.

9. Dispositif de synchronisation pour boîte de vitesses selon l'une des revendications précédentes,
l'unité de synchronisation comprenant un anneau de synchronisation (22) qui comporte une denture externe présentant une multitude de dents (24) d'anneau de synchronisation, et étant apte à bloquer un mouvement axial du manchon coulissant (12),
la denture interne du manchon coulissant (12) présentant des dents de verrouillage (42) qui présentent chacune une extrémité de dent axiale appointée des deux côtés dans le sens circonférentiel, et des dents d'engrenage (44) qui présentent chacune une extrémité de dent axiale émoussée, et
des groupes (46) de dents de verrouillage d'une pluralité de dents de verrouillage (42) directement adjacentes les unes aux autres dans le sens circonférentiel et des groupes (48) de dents d'engrenage d'une pluralité de dents d'engrenage (44) directement adjacentes les unes aux autres dans le sens circonférentiel alternant dans le sens circonférentiel.

10. Dispositif de synchronisation selon la revendication 9, **caractérisé en ce que** l'anneau de synchronisation (22) présente dans le sens circonférentiel des segments annulaires dentés (54) présentant des dents (24) d'anneau de synchronisation, et des segments annulaires édentés (56) dépourvus de dents (24) d'anneau de synchronisation, chaque groupe (46) de dents de verrouillage du manchon coulissant (12) étant agencé axialement adjacent à un segment annulaire denté (54), et chaque groupe (48) de dents d'engrenage du manchon coulissant (12) étant agencé axialement adjacent à un segment annulaire édenté (56).

11. Dispositif de synchronisation selon la revendication 9 ou 10, **caractérisé en ce que** les extrémités de dent des dents de verrouillage (42) et les extrémités de dent des dents d'engrenage (44) se trouvent sensiblement dans un plan commun (E) qui s'étend perpendiculairement à l'axe de boîte de vitesses (A).

12. Dispositif de synchronisation selon l'une des revendications 9 à 11, **caractérisé en ce que** les extrémités de dent émoussées des dents d'engrenage (44) présentent soit une face frontale qui est plane et qui s'étend perpendiculairement à l'axe de boîte de vitesses (A), soit une seule ou plusieurs faces frontales convexes, la seule face frontale convexe ou l'une des plusieurs faces frontales convexes s'étendant respectivement dans le sens circonférentiel depuis un premier point de base (28) adjacent à un flanc de dent (30) de la dent (18) de manchon coulissant jusqu'à un deuxième point de base (34) via un tronçon de sommet (32) axialement en saillie, le deuxième point de base étant adjacent à flanc de dent opposé (36) de la dent (18, 20) dans le cas d'une seule face frontale convexe, et étant un point de creux d'un enfoncement entre des faces frontales convexes voisines dans le cas de plusieurs faces frontales convexes, et une distance axiale (a) entre le tronçon de sommet (32) et chacun des points de base (28, 34) correspondant au maximum à 18%, en particulier au maximum à 10% d'une largeur de dent (b) de la dent (18) de manchon coulissant.

13. Dispositif de synchronisation selon l'une des revendications 9 à 12, **caractérisé en ce que** les extrémités de dent axiales des dents de verrouillage (42) qui sont appointées des deux côtés dans le sens circonférentiel présentent des chanfreins de verrouillage (52) qui renferment avec l'axe de boîte de vitesse (A) un angle (α) de 70° au maximum.

14. Dispositif de synchronisation selon l'une des revendications 9 à 13, **caractérisé en ce que** la denture interne du manchon coulissant (12) présente dans le sens circonférentiel entre les groupes (46) de dents de verrouillage et les groupes (48) de dents d'engrenage une dent de transition (50) respective, une extrémité de dent axiale de chaque dent de transition (50) étant divisée approximativement au milieu dans le sens circonférentiel et correspondant géométriquement à l'extrémité de dent d'une dent de verrouillage (42) du côté adjacent au groupe (46) de dents de verrouillage, et correspondant à l'extrémité de dent d'une dent d'engrenage (44) du côté adjacent au groupe (48) de dents d'engrenage.

15. Procédé de synchronisation pour le changement de vitesse d'une boîte de vitesses présentant un dispositif de synchronisation (10) selon l'une des revendications précédentes, comprenant les étapes de procédé suivantes :
a) adaptation des vitesses de rotation du manchon coulissant (12) et du corps d'embrayage (14),
b) génération d'une force axiale (F) du manchon coulissant (12) en direction du corps d'embrayage (14),
c) établissement d'une différence de vitesses de rotation entre le manchon coulissant (12) et le corps d'embrayage (14) de sorte que les faces frontales des dents (18) de manchon coulissant et des dents (20) de corps d'embrayage glissent circonférentiellement le long les unes des autres, la différence de vitesses de rotation étant établie par au moins l'une des mesures suivantes :
- augmentation d'un flux d'huile de refroidissement dans la boîte de vitesses ;
- initiation d'une synchronisation d'un autre pignon de rapport de la boîte de vitesses, lequel n'est pas relié solidaire en rotation au corps d'embrayage (14) ;
- commande d'un frein d'arbre de la boîte de vitesses ;
- commande d'un moteur électrique séparé de l'entraînement du manchon coulissant ;
d) engrenage des dents (18) de manchon coulissant entre les dents (20) de corps d'embrayage.
